## Europäisches Patentamt
## European Patent Office
## Office européen des brevets

(19)

(11) Numéro de publication: **0 149 406**
**A2**

(12) **DEMANDE DE BREVET EUROPEEN**

(21) Numéro de dépôt: **84420210.1**

(22) Date de dépôt: **17.12.84**

(51) Int. Cl.⁴: **A 01 J 27/02**
**B 05 B 13/02, B 65 G 37/02**

(30) Priorité: **15.12.83 FR 8320316**

(43) Date de publication de la demande:
**24.07.85 Bulletin 85/30**

(84) Etats contractants désignés:
**DE GB IT NL**

(71) Demandeur: **CHARVO S.A.**
**rue Leconte de Lisle**
**F-38100 Grenoble(FR)**

(72) Inventeur: **Chevret, Gabriel**
**48 Cours Jean Jaurès**
**F-38000 Grenoble(FR)**

(74) Mandataire: **Monnier, Guy et al,**
**Cabinet Monnier 142-150 Cours Lafayette B.P. 3058**
**F-69393 Lyon Cédex 03(FR)**

(54) **Machine pour la pulvérisation d'un produit sur des fromages ou articles de conformation similaire.**

(57) La machine comprend une chaîne sans fin (1) à axes verticaux dont un maillon sur deux porte à rotation un plateau propre à recevoir un fromage, ces plateaux étant en nombre impair sur la chaîne. Au poste (2) l'on charge un plateau sur deux. Les fromages traversent la cabine de pulvérisation (3) où ils reçoivent un produit approprié sur leur face supérieure et sur le haut de leur périphérie, puis le séchoir (4) et arrivent au poste de déchargement (5) prévu pour décharger un fromage sur deux et qui est alors inefficace. Ils sont retournés au poste (6), traversent à nouveau (2) mais à l'instant où celui-ci est inefficace, repassent dans la machine pour recevoir le produit sur leur autre face et sur la périphérie adjacentes, et arrivent à (5) qui les décharge (flèche 8). Des moyens sont prévus pour faire tourner les plateaux à l'intérieur de (3).

Fig.1

EP 0 149 406 A2

La présente invention a pour objet une machine destinée à pulvériser un produit de finition sur des fromages ou articles de conformation similaire présentant les mêmes problèmes.

On connaît à l'heure actuelle des machines propres à assurer l'application d'une peinture ou autre enduit sur une succession de pièces plates portées par un transporteur. Ces machines comportent en général une cabine de pulvérisation renfermant un ou plusieurs pistolets de projection qui entrent en action à l'instant où une pièce passe dans leur zone d'action. Les pièces ainsi traitées passent ensuite dans un séchoir et sont finalement évacuées.

Ces machines connues ne sont pas applicables aux fromages et articles analogues étant donné que ceux-ci doivent recevoir la pulvérisation non seulement sur celle de leurs faces horizontales qui se trouve en haut lors de la traversée de la cabine de pulvérisation, mais également sur leur pourtour et sur leur autre face horizontale.

L'invention vise à permettre d'établir une machine du genre en question qui résolve le problème ci-dessus.

Conformément à l'invention le transporteur est constitué par une chaîne de type en soi connu, disposée avec ses axes d'articulation orientés verticalement, et qui porte une succession de plateaux horizontaux ou "tourettes", montés sur elle à rotation libre, ces tourettes comportant un diamètre inférieur à celui des fromages à traiter. L'axe de chaque tourette se prolonge en direction du bas et est solidaire d'une roue de friction propre à venir au passage en contact avec un rail correspondant prévu dans la cabine de projection de façon à faire tourner le fromage sur lui-même pendant qu'il reçoit le produit pulvérisé. Il est prévu un poste de chargement et un poste de déchargement entre lesquels est agencé un poste de retournement où un fromage sur deux est soulevé de la tourette correspondante et retourné sur lui-même d'un demi-tour pour revenir sur celle-ci. On comprend que si le nombre des tourettes portées par la chaîne est impair, on peut charger une tourette sur deux au poste de chargement et laisser passer également une tourette sur deux à celui de déchargement de façon que finalement chaque fromage considéré déposé sur une tourette au poste de chargement circule à travers toute la machine, passe en face du poste de chargement à l'intant où celui-ci est inefficace, puis soit retourné sur lui-même, passe ensuite au poste de chargement pendant la période d'inefficacité de celui-ci et traverse à nouveau la machine pour être finalement évacué lorsqu'il revient au poste de déchargement. La machine peut ainsi fonctionner de façon continue en assurant la pulvérisation du produit sur toute la surface de chaque fromage.

Le dessin annexé, donné à titre d'exemple, permettre de mieux comprendre l'invention, les caractéristiques qu'elle présente et les avantages qu'elle est susceptible de procurer :

Fig. 1 est une vue en plan très schématisée de l'ensemble de la machine faisant ressortir les emplacements des divers postes ou cabines.

Fig. 2 est une vue en élévation partielle de la chaîne porteuse.

Fig. 3 est la vue en plan correspondante.

Fig. 4 montre le détail en coupe transversale d'un maillon et d'une "tourette" de cette chaîne.

Fig. 5 est une coupe longitudinale du poste de chargement.

Fig. 6 est la vue en plan correspondante avec arrachements partiels, la ligne de coupe de fig. 5 y étant indiquée en V-V.

Fig. 7 montre en coupe le poste de retournement.

Fig. 8 en est une vue en plan.

Fig. 9 en est une vue en coupe transversale.

Fig. 10 est une coupe de détail à l'intérieur de la cabine de pulvérisation.

Fig. 11 est un schéma indicateur des déplacements des fourches élémentaires du poste de retournement.

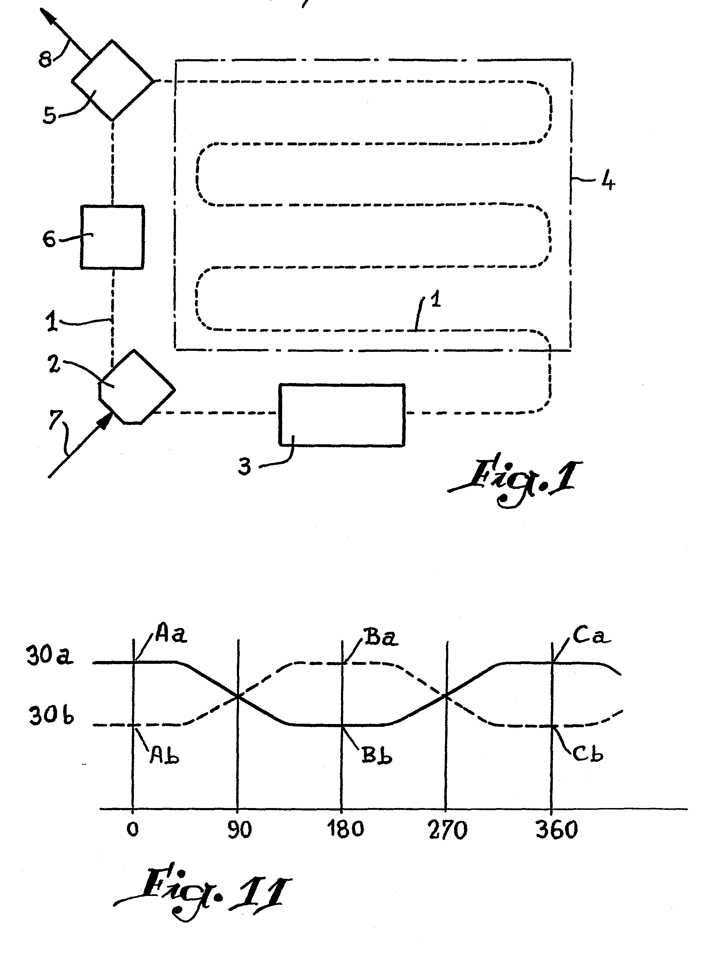

Dans la représentation très schématisée de fig. 1, la chaîne transporteuse de la machine a été illustrée sous la forme d'un simple trait 1. On aperçoit en 2 le poste de chargement des fromages, en 3 la cabine de pulvérisation du produit de finition sur eux, en 4 le séchoir (indiqué en traits mixtes pour ne pas être confondu avec la chaîne) et dans lequel les fromages suivent un parcours en zig-zag, en 5 le poste de déchargement et en 6 celui de retournement. Comme sus-indiqué, les postes 2 et 5 fonctionnent une fois sur deux, c'est-à-dire que le premier charge un fromage sur l'un des supports ou "tourettes" que porte la chaîne, laisse ensuite passer librement une tourette, puis charge la suivante, etc... De même, le poste 5 décharge une tourette sur deux qui passent devant lui. Le nombre des tourettes étant impair, il est clair qu'un fromage chargé en 3 (flèche F) traverse la cabine 3 où il reçoit une couche du produit concerné, puis circule dans le séchoir 4 pour arriver au poste de déchargement 5. Les postes 2 et 5 étant convenablement synchronisés, quand il arrive à ce dernier celui-ci est en position inefficace. Le fromage

3 0149406

le traverse donc librement, est retourné au poste 6 et revient au poste de chargement. Ce dernier est alors lui aussi inefficace ; le fromage le traverse donc et passe à nouveau dans la cabine de pulvérisation 3 où, ayant été retourné, il reçoit le produit sur les parties de sa surface qui n'avaient pas été traitées la première fois. De là, il circule encore dans le séchoir 4 pour revenir au poste de déchargement 5. Cette fois, celui-ci est en action. Il évacue donc le fromage (flèche 8).

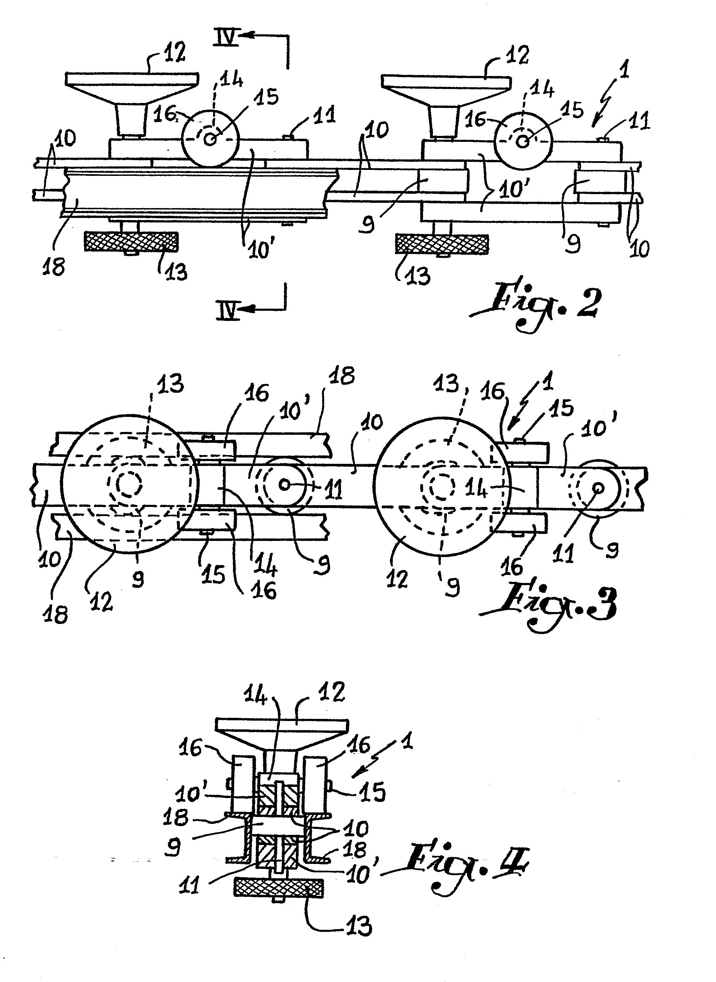

Fig. 2 à 4 montrent le détail de la chaîne et des tourettes qu'elle porte. Ainsi qu'on peut le voir, il s'agit d'une chaîne classique à axes d'articulation verticaux comportant des rouleaux 9 reliés les uns aux autres à rotation par des maillons plats 10, étant noté (fig. 3) que le diamètre des premiers 3 est un peu supérieure à la largeur des seconds 10. L'axe d'articulation 11 d'un rouleau sur deux se prolonge d'une part vers le haut pour porter un plateau 12, lequel constitue ce qu'on a appelé plus haut la tourette, d'autre part vers le bas pour être rigidement solidaire d'une roue 13 à périphérie moletée. On notera encore que chacun des maillons supérieurs correspondant à la largeur (ou hauteur) maximale de la chaîne (maillons référencés 10') est solidaire de bossages 14 dans chacun desquels est monté à rotation un axe 15 terminé par deux roulettes latérales 16. Le maillon inférieur qui se trouve au-dessous du maillon 10' précité est à épaisseur renforcée.

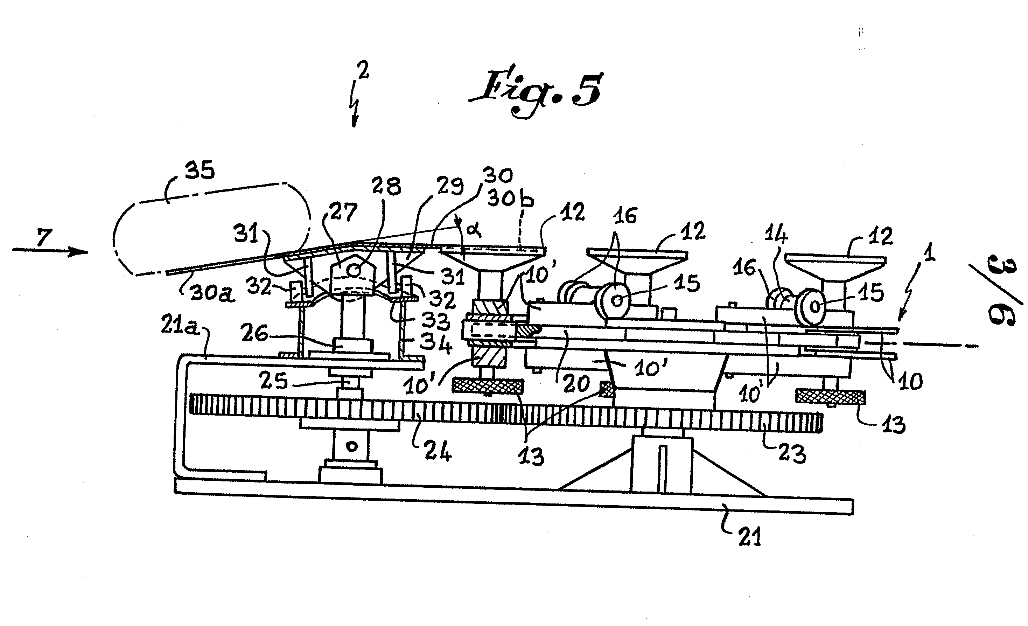

Fig. 4 montre comment est établi le guidage de la chaîne ainsi réalisée. Il est prévu deux rails parallèles 18 fixés au bâti de la machine et qui présentent chacun un profil en C s'ouvrant en sens inverse par rapport à celui de l'autre. L'écartement entre les voiles verticaux en vis-à-vis de ces rails est légèrement supérieur au diamètre des rouleaux 9 qui peuvent donc circuler librement dans l'espace intermédiaire ainsi délimité en roulant au besoin contre l'un ou l'autre desdits voiles. Les roulettes 16 roulent quant à elles sur l'aile supérieure des rails en supportant le poids de la chaîne et des fromages qu'elle peut porter. Les tourettes 12 circulent bien au-dessus des rails et les roues moletées 13 bien au-dessous.

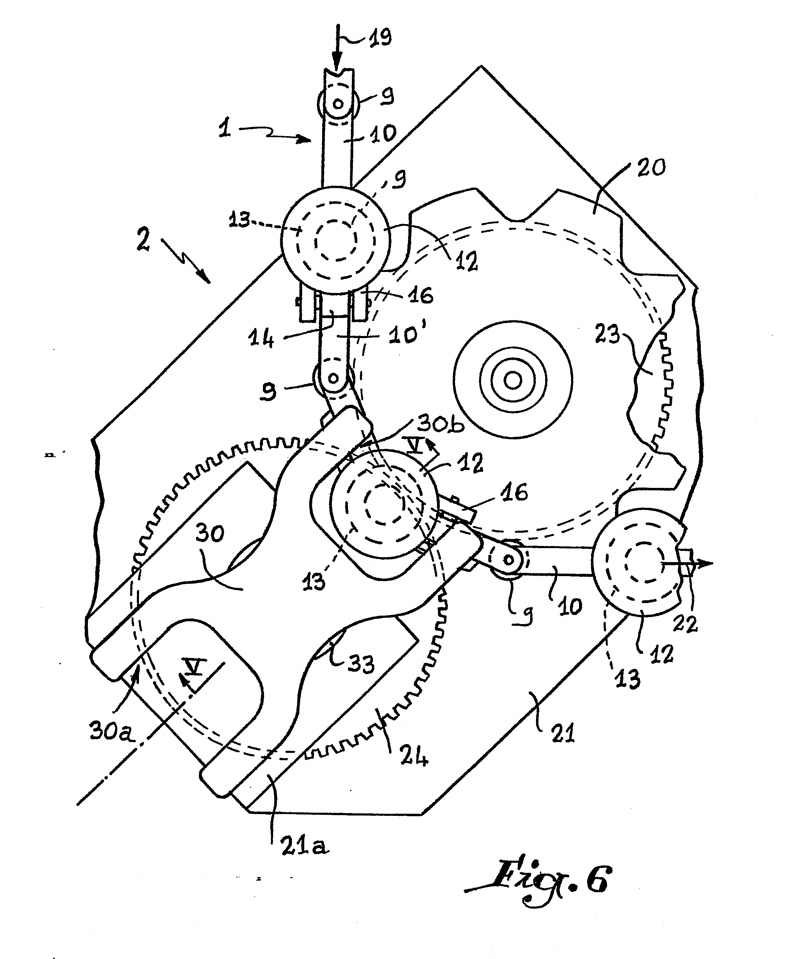

Fig. 5 et 6 illustrent les détails du poste de chargement 2. Pour bien les comprendre, il faut noter que fig. 6 tient compte de l'orientation de ce corps à 45° par rapport aux parcours rectilignes de la chaîne 1. Fig. 5 est donc une vue en élévation avec coupe partielle dans le plan vertical de la flèche 7 en fig. 1 et fig. 6 la vue en plan correspondante. En fig. 6, on aperçoit la chaîne 1 qui arrive au poste suivant la flèche 19, qui s'y enroule de 90° autour d'une roue dentée 20 correspondante portée par le socle 21 du poste, et qui repart en ligne droite comme indiqué par la flèche 22. La roue 20 est à entailles semi-circulaires pour recevoir les rouleaux 9. Elle est solidaire en rotation d'une roue d'engrenage inférieure 23 (fig. 5), laquelle est en prise avec une autre roue dentée 24 calée sur un arbre vertical 25. Ce dernier traverse en direction du haut un palier intermédiaire 26 solidaire d'une partie 21a relevée et repliée à l'horizontale du socle 21, et il vient porter en bout un dé 27 dans lequel est monté un axe transversal 28. Sur ce dernier est articulée une chape 29 dont la face extérieure est solidaire d'une pièce en tôle 30 découpée à un profil qui correspond à deux fourches élémentaires 30a et 30b opposées diamétralement l'une à l'autre. Comme montré, le fond de la chape 29 et la double fourche 30-30a-30b définissent deux plans faisant l'un avec l'autre un léger angle $\alpha$ , les deux fourches élémentaires 30a ne se trouvant donc pas exactement dans le prolongement l'une de l'autre. Il est à noter que l'espace libre délimité par les branches de chacune de ces fourches est de largeur supérieure au diamètre des tourettes 12.

La face inférieure de la chape 29 est solidaire de deux pieds 31 qui lui sont fixés en deux points diamétralement opposés l'un à l'autre. Chacun de ces pieds porte en bout une roulette 32 qui vient rouler sur une came 33 refermée sur elle-même et qui entoure l'arbre 25, cette came étant supportée pat une pièce cylindrique creuse 34 fixée au prolongement relevé 21a du socle 21.

Fig. 11 montre sous forme de deux graphiques Aa, Ba, Ca et Ab, Bb, Cb les déplacements verticaux opposés que la came 33 impose aux fourches élémentaire 30a et 30b en fonction de l'angle de rotation de l'arbre 25. Si l'on suit la courbe 30a en prenant pour point de départ zéro (point Aa) la position correspondant à fig. 5 et 6, on voi qu'alors cette fourche 30a est à la position haute. Elle a reçu d'un dispositif d'alimentation approprié non détaillé un fromage 34 (indiqué en traits interrompus en fig. 5 seulement) de diamètre nettement supérieur à sa largeur totale. La fourche 30b est au contraire en position basse. Au bout d'environ 45° de rotation, les deux fourches se déplacent verticalement en sens inverse ; 30a descend pour arriver en position basse vers 135°. Les choses sont réglées de manière telle qu'au cours de cette descente la fourche 30a vienne entourer une tourette 12 de la chaîne 1 un peu à la façon dont un creux de denture d'une roue d'engrenage entoure une dent de l'autre roue.

Au cours de son mouvement descendant la fourche 30a dépose ainsi le fromage sur cette tourette qui, tournant autour de la roue 20, la dégage de la fourche et l'entraîne vers la cabine 3. Pendant ce temps la fourche élémentaire 30b reçoit un nouveau fromage du dispositif d'alimentation. Si la came est correctement profilée, le fromage se trouve parfaitement centré sur la tourette.

La roue 20 comporte huit dents. Comme il est prévu une tourette 12 tous les deux maillons (voir fig. 2), le développement de cette roue 20 correspond à quatre tourettes. De son côté la fourche double 30 est grossièrement assimilable à un engrenage à deux creux de denture opposés avec deux espaces vides intermédiaires. Les roues 20 et 24 ayant le même diamètre primitif, le synchronisme est réalisé et le poste décrit assure donc le chargement d'une tourette sur deux, l'autre intersectant l'axe de symétrie du poste (axe correspondant à la flèche 7 de fig. 6) à l'instant où la double fourche 30 est orientée transversalement à cet axe.

Bien entendu les rails 18 de fig. 4 doivent être interrompus dans l'espace correspondant à la roue 20, mais il est à noter que pour chaque tourette 12 l'une des roulettes latérales 16 peut venir reposer sur la roue 20 elle-même.

Le dispositif d'alimentation auquel on s'est référé plus haut peut être quelconque ; on peut même opérer à la main. Une solution préférée consiste à amener les fromages à traiter sur un transporteur à rouleaux orienté perpendiculairement à la flèche 7 en fig. 1 et 6 et à les arrêter par une butée disposée de façon à ce que le premier d'entre eux soit exactement centré sur le trajet correspondant à celle-ci. Lorsque l'une des fourches élémentaires 30a ou 30b se présente sur ce trajet, un vérin poussoir, orienté suivant la flèche 7, repousse ce fromage sur ladite fourche.

Le poste de déchargement 5 de fig. 1 est rigoureusement identique à celui de chargement 2, mais il fonctionne à l'inverse ainsi que cela est simple à expliquer.

Si l'on suppose ainsi que fig. 5 et 6 représentent non plus le poste de chargement, mais celui de déchargement, on comprend que moyennant un calage approprié des roues 23 et 24, une fourche élémentaire peut venir entourer progressivement une tourette 12 portant un fromage traité à décharger. En se soulevant la fourche dégage le fromage de la tourette et elle l'entraîne en rotation autour de l'axe de l'arbre 12 pour l'abaisser ensuite après un demi-tour. Si l'on a prévu un transporteur convenablement disposé, elle peut ainsi le déposer sur celui-ci qui l'évacue assez rapidement (flèche 8 de fig. 1) pour qu'il ne soit pas entraîné par les branches de la fourche qui poursuit sa rotation. Finalement, la seule modification par rapport au poste de chargement 2 est que lorsqu'une fourche entoure une tourette 12, la came 13 la soulève au lieu de l'abaisser, ce qu'on réalise aisément par un calage approprié de la came ou de la pièce 34 qui la supporte .

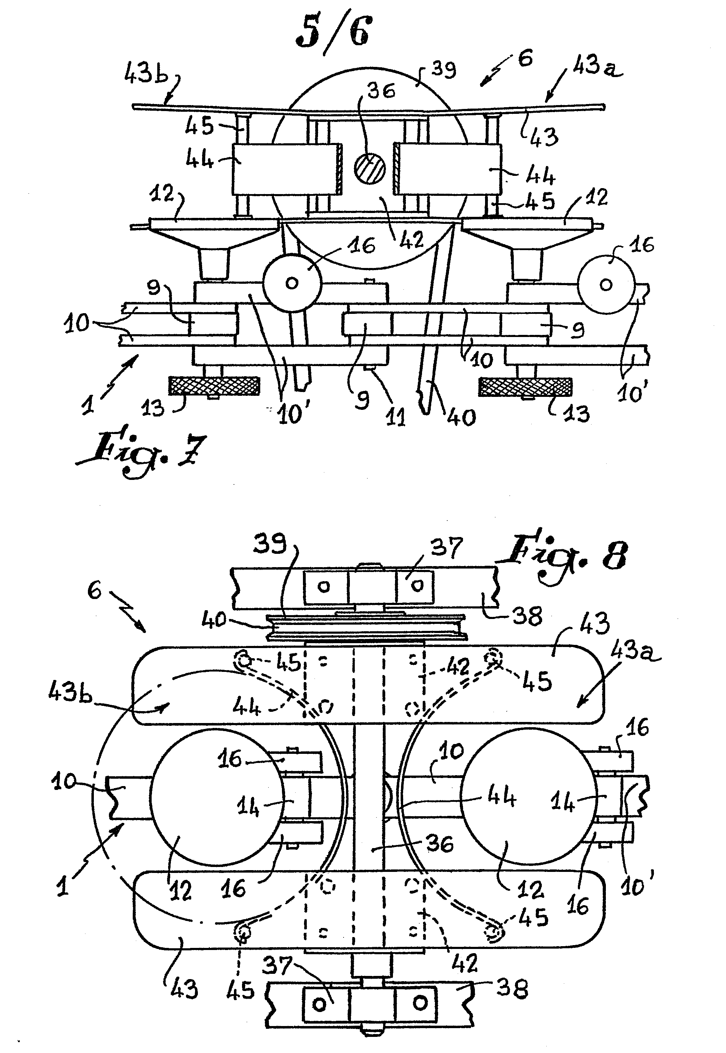

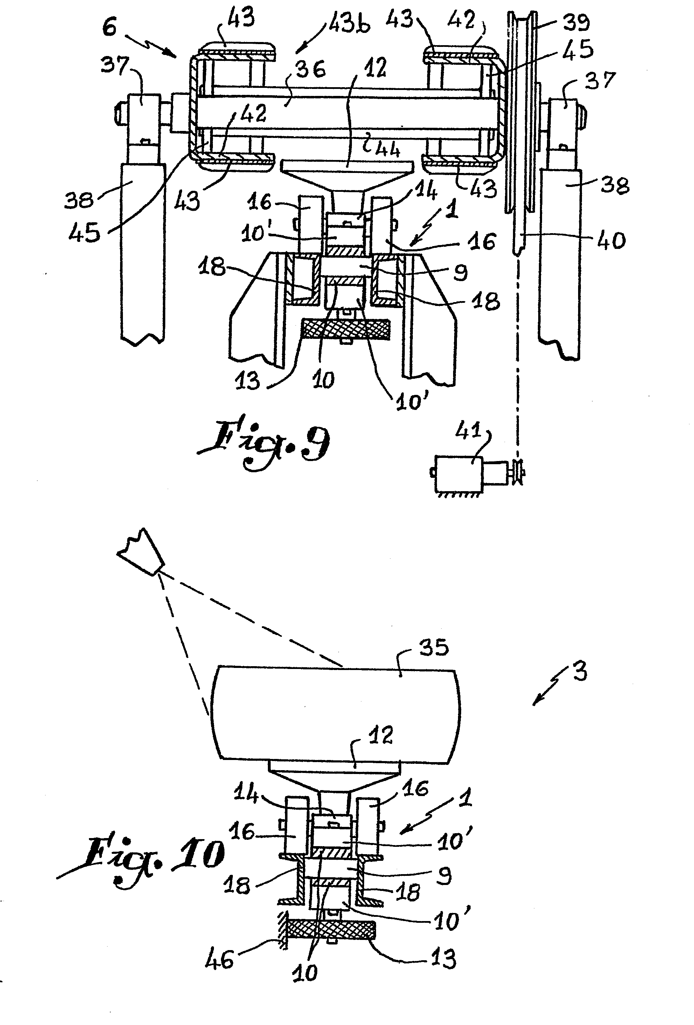

Fig. 7 à 9 indiquent les détails du poste de retournement 6 de fig. 1. Il comprend un arbre 36 porté par des paliers 37 montés sur des supports appropriés 38. Sur cet arbre est calée une poulie 39 qu'une courroie 40 relie à un moto-réducteur 41 agencé, par exemple par le moyen d'une poulie réglable et de circuits électroniques associés à des détecteurs appropriés, de manière qu'à chaque mise en marche il fasse tourner ledit arbre exactement d'un demi-tour. L'arbre 36 porte deux ferrures en U 42 s'ouvrant l'une vers l'autre et sur chacune des ailes desquelles sont montées deux tôles 43 dont chacune est découpée de façon à constituer là encore deux fourches élémentaires 43a, 43b opposées d'ouverture supérieure au diamètre d'une tourette 12. Toutefois, au contraire du poste de chargement su-décrit, ces deux fourches élémentaires sont orientées suivant un plan moyen commun et portent deux paires de fourches élémentaires disposées à un écartement l'une de l'autre égal à l'épaisseur d'un fromage 35.

Par ailleurs il est prévu entre les deux fourches doubles 43 deux rubans métalliques 44 recourbées en arc de cercle, portés par des entretoises 45 et qui définissent deux poches à peu près semi-circulaires propres à former butées pour les fromages, comme expliqué ci-dessous.

Lorsqu'une tourette 12 portant un fromage non encore retourné arrive au poste 6 (soit donc un sur deux des fromages portés par la chaîne 1), il trouve devant lui les fourches superposées à l'arrêt en position horizontale. Les entrées de cette superposition étant légèrement divergentes, il pénètre dans l'ensemble ainsi réalisé. Lorsqu'il arrive au fond, un détecteur approprié quelconque, optique ou mécanique, met en marche le moto-réducteur pour faire tourner l'arbre 36 d'un demi-tour. Le fromage est alors soulevé de la tourette 12, il est progressivement retourné en étant retenu par l'un des rubans 44, puis est abaissé à nouveau à son niveau de départ à la position horizontale. La vitesse du moto-réducteur 41 et le rapport de transmission entre celui-ci et l'arbre 36 sont réglés de façon telle que le fromage soit ainsi déposé exactement sur la tourette 12 à partir de laquelle il avait été soulevé.

On notera que lorsque les doubles fourches 43 sont à la verticale, elles laissent librement passer le fromage qui ne doit pas être retourné, ce qui est évidemment essentiel.

Il reste maintenant à parler du poste de projection renfermé par la cabine 3. Celui-ci est de construction classique, c'est-à-dire qu'il comporte un pistolet propre à projeter sur les fromages successifs la suspension qu'on désire leur appliquer. Il est avantageux de prévoir d'abod, à la façon en soi connue, des moyens détecteurs pour que le pistolet n'entre en fonctionnement que lorsqu'un fromage se trouve devant lui, ensuite d'autres moyens pour que ce pistolet suive un instant le fromage en mouvement, puis revienne à son point de départ pour en traiter un autre.

Conformément à une disposition préférée, l'on prévoit dans la cabine 3 plusieurs pistolets disposés à la suite les uns des autres et l'on agence les détecteurs pour que chacun d'eux ne traite qu'un fromage sur deux (ou davantage) qui se suivent.

Enfin, suivant une autre caractéristique de l'invention, la cabine renferme un rail supplémentaire 46 (fig. 10), fait par exemple en caoutchouc ou autre matière élastique à fort coefficient de frottement, ce rail étant disposé de manière à agir au passage sur les roues moletées 13 afin d'entraîner en rotation les tourettes 12 successives. Ainsi, les fromages en cours de traitement tournent devant les pistolets disposés obliquement par rapport à leurs axes, de telle sorte que toute leur surface supérieure reçoit la projection, ce qui, en association avec le retournement, assure la régularité du recouvrement.

Il doit d'ailleurs, être entendu que la description qui précède, n'a été donnée qu'à titre d'exemple et qu'elle ne limite nullement le domaine de l'invention dont on ne sortirait pas en remplaçant les détails d'exécution décrits par tous autres équivalents.

# 0149406

## - REVENDICATIONS-

1. Machine pour la pulvérisation d'un produit sur des fromages ou autres articles de conformation similaire, dans laquelle les fromages reposent sur des supports portés en nombre impair par une chaîne transporteuse à égale distance les uns des autres, cette machine comportant un poste de chargement auquel les fromages amenés en succession sont chargés sur un sur deux des supports qui passent dans le poste, lequel est traversé librement par les autres supports, une cabine de pulvérisation où le produit est projeté sur les fromages successifs, un poste de déchargement propre à retirer de la chaîne et à évacuer de la machine un fromage sur deux qui le traversent, le fromage ainsi évacué étant l'un de ceux qui ont traversé librement le poste de chargement, et un poste de retournement interposé entre le poste de déchargement et celui de chargement et auquel un fromage qui a traversé ledit poste de déchargement est retourné sur lui-même et déposé sur ce même support ou sur tout autre support libre, le tout de façon que chaque fromage chargé au poste de chargement circule à travers la cabine, traverse librement le poste de déchargement, soit retourné sur lui-même, repasse à l'état retourné dans la cabine et revienne au poste de déchargement pour y être évacué de la chaîne, caractérisée en ce que les supports sont constitués par des plateaux circulaires (12) de diamètre inférieur à celui des fromages (35) à traiter et portés à rotation par certains au moins des maillons successifs (10, 10') de la chaîne (1).

2. Machine suivant la revendication 1, dans laquelle les axes (11) des maillons (10, 10') sont verticaux, caractérisée en ce que les plateaux (12) sont solidaires de prolongements vers le haut de certains de ces axes.

3. Machine suivant l'une quelconque des revendications 1 et 2, caractérisée en ce que les axes des plateaux (12) se prolongent au-dessous de la chaîne (1) pour porter des roues moletées (13), tandis qu'à l'intérieur de la cabine de pulvérisation il est prévu un rail fixe (46) contre lequel ces roues (13) viennent rouler au passage pour entraîner en rotation les fromages successifs (35) soumis à la pulvérisation.

4. Machine suivant la revendication 3, caractérisée en ce que les jets de pulvérisation sont orientés obliquement à l'intérieur de la cabine (3).

5. Machine suivant l'une quelconque des revendications précédentes, caractérisée en ce que la cabine de pulvérisation (3) renferme plusieurs appareils dont chacun est mobile pour suivre un support (12) sur plusieurs successifs de ceux-ci, puis revenir à sa position de départ pour en suivre un autre.

6. Machine suivant l'une quelconque des revendications précédentes, caractérisée en ce que le poste de chargement (2) comprend une roue dentée sur laquelle la chaîne (1) s'enroule au passage et une pièce (30) en forme de fourche double faite de deux fourches élémentaires opposées (30a, 30b) et portée à basculement par un arbre (25) entraîné en synchronisme avec le passage des maillons de la chaîne (1), de façon à se présenter une fois sur deux pour entourer un plateau (12) de celle-ci en engrenant en quelque sorte avec lui, l'ouverture de chacune de ces fourches élémentaires étant supérieure au diamètre des plateaux (12), tandis qu'il est prévu des moyens pour faire basculer la fourche de façon à soulever le fromage qui vient d'être chargé dans le poste, à l'amener au-dessus de la chaîne (1) et à le déposer sur un plateau (12) qui arrive à l'état vide du poste de déchargement (5) après avoir traversé librement celui de retournement (6).

7. Machine suivant la revendication 6, caractérisée en ce que les moyens de commande du basculement de la pièce en forme de fourche double sont constitués par une came cylindrique (33).

8. Machine suivant la revendication 7, caractérisée en ce que le poste de déchargement (5) est identique au poste de chargement (2), sauf en ce qui concerne le calage (33) de la came, laquelle est prévue pour soulever un fromage (35) sur deux du plateau (12) qui le porte en vue de l'évacuer sur un transporteur ou autre organe approprié.

9. Machine suivant l'une quelconque des revendications 1 à 8, caractérisée en ce que le poste de retournement (6) comprend deux pièces (43) en forme de fourches doubles portées par un arbre transversal (36) à un écartement l'une de l'autre égal à l'épaisseur d'un fromage (35), l'ouverture desdites fourches étant supérieure au diamètre des plateaux (12), lequel arbre est commandé de façon qu'au repos les deux fourches soient disposées horizontalement pour recevoir un fromage, tandis qu'il est prévu des moyens pour qu'une fois le fromage (35) engagé entre les fourches, cet arbre (36) effectue alors une rotation d'un demi-tour à une vitesse telle que le fromage ainsi retourné soit déposé sur le même plateau (12) ou sur un autre se trouvant à l'état vide.

10. Machine suivant la revendication 9, caractérisée en ce qu'entre les deux pièces (43) en forme de fourche double, il est prévu des moyens de butée (44) qui arrêtent le fromage (35) lors de son arrivée et le retiennent pendant le retournement.

Fig.1

Fig.11

Fig. 2

Fig. 3

Fig. 4

Fig. 5

0149406

0149406

*Fig.6*

0149406

**Fig. 7**

**Fig. 8**

0149406

Fig.9

Fig.10